# EUROPEAN PATENT APPLICATION

(11) **EP 4 395 260 A1**
(43) Date of publication of application: **03.07.2024**
(21) Application number: 22383309.6
(22) Date of filing: 29.12.2022
(51) Int. Cl.: H04L 43/0876, H04L 43/0811, H04L 41/147, H04W 16/00, H04W 28/00, H04L 41/5009, H04L 41/5019, H04L 43/062, H04L 43/0888

(54) **A COMPUTER IMPLEMENTED METHOD FOR IDENTIFYING DEVICE PATTERNS AND REQUIREMENTS FOR NETWORK ORCHESTRATION**

(71) Applicant: Telefonica Innovacion Digital SL, 28050 Madrid (ES)
(72) Inventor: LUTU, Andra, 28013 Madrid (ES)
(74) Representative: Carlos Hernando, Borja

(57) **Abstract**

A computer implemented method and computer programs for identifying device patterns and requirements for network orchestration are provided. The method comprises accessing captured network activity data regarding at least three different categories of devices including a first type of device, a second type of device and a third type of device, each of the first, second and third type of devices operating according to a different radio access technology specification; analyzing spatial and temporal behaviors of the first, second and third type of devices by computing metrics thereof using the captured network activity data, the metrics including service connectivity, user data traffic, control traffic, inbound roamers, user activity and/or mobility patterns; and computing one or more similarity measures between the first, second and third type of devices by means of implementing an unsupervised clustering approach that identifies the emerging traffic patterns and network requirements within the three different categories of devices

## Description

### Technical Field

The present invention relates to a method, and to computer programs, for identifying device patterns and requirements for network orchestration. Specifically, the invention is based on an unsupervised clustering approach that enables such identification of the device patterns and requirements.

### Background of the Invention

Since 2019, rapid deployment efforts of 5G networks all around the world we have been witnessing. The research community has devoted attention to these operational networks, studying different user-side performance metrics, including throughput, application performance, power consumption, or the impact of extreme mobility. These studies focus on measurements from the end-user perspective, often capturing only a partial view of the network and mostly considering smartphone devices only. However, 5G mobile networks set a high bar for the entire cellular ecosystem. On the one hand, these networks aim to connect entire industries by providing smart connectivity to a dazzling number of heterogeneous devices that operate globally in different environments. On the other hand, they aim to accommodate the requirements of a wide range of applications and do so with stringent service-level agreements.

Within the different 5G services different profiles or patterns emerge, even in the same key area, which translates into different requirements in terms of network service for the different categories of devices.

New solutions are therefore needed for identifying device patterns and requirements (i.e. to perform a smart user classification) in the context of loT market growth to be able to benefit and exploit better 5G innovations.

### Description of the Invention

Present invention analyses different 5G services belonging to the three key areas for 5G, (namely, massive Machine Type Communication (mMTC), ultra-reliable low-latency communication (URLLC) and enhanced Mobile Broadband (eMBB)), since those different services can present wildly divergent profiles from each other.

To that end, according to one aspect, a computer implemented method for identifying device patterns and requirements for network orchestration is proposed. The method comprises accessing, by a processor, captured network activity data regarding at least three different categories of devices including a first type of device, a second type of device and a second type of device, each of the first, second and third type of devices operating according to a different radio access technology specification; analyzing, by a processor, spatial and temporal behaviors of the first, second and third type of devices by computing metrics thereof using the captured network activity data, the metrics including service connectivity, user data traffic, control traffic, inbound roamers, user activity and/or mobility patterns; and computing, by a processor, one or more similarity measures between the first, second and third type of devices by means of implementing an unsupervised clustering approach that identifies the emerging traffic patterns and network requirements within the three different categories of devices.

In a particular embodiment, the first, second and third type of devices comprise smart meters, connected cars, and smartphones.

In an embodiment, the unsupervised clustering approach comprises dissecting the spatial and temporal behaviors, ignoring their device category, providing a feature set as a result; using a neural network autoencoder to reduce dimensions of the feature set to a given number; using an output of the neural network autoencoder as features for clustering algorithms, generating a given number of clusters as a result; and choosing a given number of clusters according to the elbow-method.

In an embodiment, the neural network autoencoder comprises a three-layer Encoder-Decoder with 128, 64, 32 hidden units.

In an embodiment, the mean-squared-error is considered as the loss function of the neural network autoencoder.

In an embodiment, the method further uses Representational Similarity Matrices, RSMs, and examines a cosine similarity between the representations of each pair of users in the same device category and in the same cluster.

In an embodiment, the analyzing step further comprises computing an evolution between two different time intervals of each different type of device.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached figures, which must be considered in an illustrative and non-limiting manner, in which:

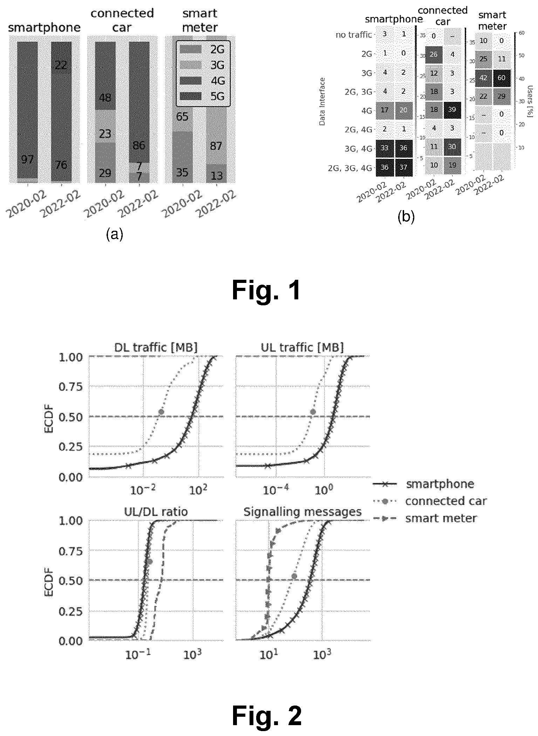

Fig. 1 Device share with respect to radio access technology. (a) shows the device capability. (b) shows the data interface connectivity.
Fig. 1. Daily traffic analysis [log scale].
Fig. 3 Mobility features of devices: gyration and number of sectors.
Fig. 4 RSMs between pair of users on a random sample of 1000 users.
Fig. 5 Preliminary results (a) motivating the need for the clustering approach, and showing (b) the main features that were for clustering.

### Detailed Description of the invention and of Preferred Embodiments

Present invention proposes the use of different (basic) metrics to capture the fundamentally different behavior of different categories of devices. The 5G design correctly predicted the importance of their corresponding use case areas, but it needs to properly integrate them into a set of fine-granular requirements for resource orchestration.

One of the main challenges for the deployment of 5G SA networks is managing the heterogeneity of devices and their service demand. This is particularly dire when considering that the key promise of 5G is to enable use cases for URLLC and mMTC areas did not anticipate the success of the global operational model that loT verticals chose (i.e., the ability to deploy their devices in different economies across the world with minimal management overhead by overloading the international mobility function of the cellular ecosystem). Present invention approach takes into consideration the diversity within the device population that connects to the network of an MNO. To demonstrate the fact that the features capture the diversity of the device population, present invention, in an embodiment, analyzes three representative groups of devices, in particular, connected cars as a use case of URLLC, smart meters as a representative of mMTC, and smartphones for eMBB.

5G-capable device adoption over the last two years (2020 - 2022) increased. A dataset used by the invention shows that the population of 5G users has increased 2.6 times since the early months of 2020. On average, the number of devices is daily increasing at the ratio of 0.29% in 2022, which it is attributed to the maturity of the 5G deployment and the availability of 5G-capable smartphones. Further, DL (UL) traffic generated by 5G-capable smartphones is 4.46 (3.5) higher than that of 4G (comparing their medians). One might argue that these early adopters are technology-oriented people buying 5G smartphones. To investigate it, the proposed method compared the DL traffic of the upper 25 percentile of 4G smartphones in 2020 (as traffic-intensive candidates may have migrated to 5G) with the median of 5G-capable smartphones in 2022. It can be observed that the former is 49% higher than the latter. Thus, 5G smartphones are not only limited to traffic-intensive users anymore, and the user profile is not the primary reason for the enormous traffic generated by 5G smartphones. This suggests traffic growth by 5G market acquisition, which was correctly anticipated with the 5G vision.

Next, the device population breakdown over the three major categories that represent the three 5G pillars was explored. Smartphones are still the primary users of the cellular network, with a share of 63% in 2022. Still, they lost 2% compared to 2020 when they had 65% of daily users within the invention's sample. In the last two years, while the number of smartphones has been increasing by about 12%, the number of connected cars and smart meters has been rapidly rising at an average rate of 635% and 111%, respectively. The fact that the production year of 13% (20%) of connected car (smart meters) equipment is either 2020 or 2021 is also a clear validation of their rapid adoption.

For the traffic analysis, a validated sample of 14 million smartphones, 5.5 million smart meters, and 1 million connected cars was explored by considering daily metrics and by computing the mean per user over all days of analysis.

### Service Connectivity:

Fig. 1 (a) reports the radio technologies each device in the sample supports. This is based on the frequency bands reported in the GSMA TAC database for each device type. From 2020 to 2022, it was observed a clear trend of migrating to newer radio technologies. In the sample for 2022, it was observed a ratio of 22.4% of 5G-capable smartphones and 0.06% of 5G-capable connected cars, validating that 5G penetration is growing. Additionally, 85.6% of cars are 4G capable in 2022. However, for smart meters in 2022, it was found that 87.5% of them are still 3G-capable only, and 12.5% are only 2G-capable. This, jointly with the long life of smart meters (i.e., 4.7 years on average), suggests the operators must still consider support for legacy networks.

Fig. 1 (b) shows heatmaps of device activity on the data interfaces per radio technology. Note that, from the point of view of the core, it is impossible to detect 5G connectivity due to the current NSA deployment. The evolution of service connectivity over two years was observed. In particular, in 2022, 90% of cars are active at least once on the 4G interface per day. Also, unlike in 2020 - when 10.3% of smart meters were not active on any data interfaces (i.e., they relied only on SMS/voice communications) - all of them are active on data interfaces in 2022.

### User Traffic:

Fig. 2 shows the ECDF of UL and DL traffic, UL/DL ratio (i.e., the amount of UL traffic divided by DL traffic per user) in 2022. The distributions of both DL and UL traffic are highly skewed: even though 75 percent of users generate relatively low traffic (i.e., in order of 10-100 MB), there are a few users with huge traffic volumes (a few GB) in DL/UL direction. A similar trend for connected cars was noticed, with a median of 99.5% (98%) lower than the median DL (UL) traffic of smartphones. Contrariwise, very small volumes of traffic for the majority of smart meters were noted. This implies it is hard to separate their little traffic from downlink-intensive applications.

It was observed that 88% of the smartphones in the sample have an UL/DL ratio lower than 1, with a share of 11 % generating DL traffic 10 times higher than UL traffic. Although connected cars resemble smartphones, the median UL/DL ratio exceeds 0.58 (vs. 0.31 for smartphones). This implies a relatively larger UL than DL for connected cars compared to smartphones. However, the trend is decreasing slowly, and it is noted a 21% lower UL/DL ratio in 2022 compared to 2020. This suggests connected cars begin to generate more significant DL traffic than UL. On the contrary, the median UL/DL ratio for smartphones is 8% higher in 2022. The dataset also reveals an upward trend in user traffic in both directions over the last two years, only a further rise for UL: UL traffic has grown 65%, while this has been so 50% for DL. In a nutshell, smartphones and connected cars are DL-intensive applications, whereas those few smart meters generating traffic focus mostly on the uplink.

### Control traffic:

Next the amount of radio signaling events from devices was analyzed. The method captured signaling activity from the passive monitoring of MSC and MME elements and show ECDFs of the overall number of messages per day per device category in Fig. 2. Smartphones generate the most signaling traffic, which is 35.2 times higher than that of smart meters and 4.69 times higher than connected cars (comparing their median values). The slope of signaling ECDF for smart meters is steep around the middle, which suggests a tight range of values. Since they connect to a few sectors (with 90% of the time on the same sector), they may congest the radio network in the case of dense deployment of synchronized smart meters, which may trigger signaling storms. In this case, the MNO needs to do the whole signaling procedure to send only few bytes, and the signaling load may exceed the benefits from carrying the actual traffic. This issue appertains to all mMTC use cases such as smart meters.

### Inbound roamers:

Inbound roamers are devices operating with SIM cards of a different operator rather than the MNO whose radio network is used. 12.93% of smart meters observed in the sample dataset are inbound roamers, and only 1.82% of cars are native devices (i.e., operating with a native SIM card from the operator we analyze). This global approach for deploying different verticals brings additional complexity and challenges to the visited network, especially when considering the signaling exchange required with their home network. It is also observed that car brands follow a centralized strategy regarding SIM card ownership. In this respect, a clear winner per brand for the home country of the SIM card is observed. For example, 98% of cars from brand 1 use SIM cards from an Austrian operator.

### User activity:

In the next step, the invention calculated the number of days each inbound roaming device is active on the network to analyze its roaming persistence. Overall, it was found that 33% of inbound roamer smartphones are only active for one day. On the other hand, it was found that 80% (18%) of roaming cars (smart meters) are active on the network for all captured days in the sample. Moreover, 52% of roaming smart meters are connected at least half of the days. This shows that inbound roamer loT devices are not only more in terms of numbers but also stay on the network permanently, unlike roamer smartphones. For native devices, it was found that overall, 79% of smartphones, 80% of connected cars, and 87% of smart meters use the network during the whole period of analysis. This indicates smart meters are permanent on the network.

### Mobility patterns:

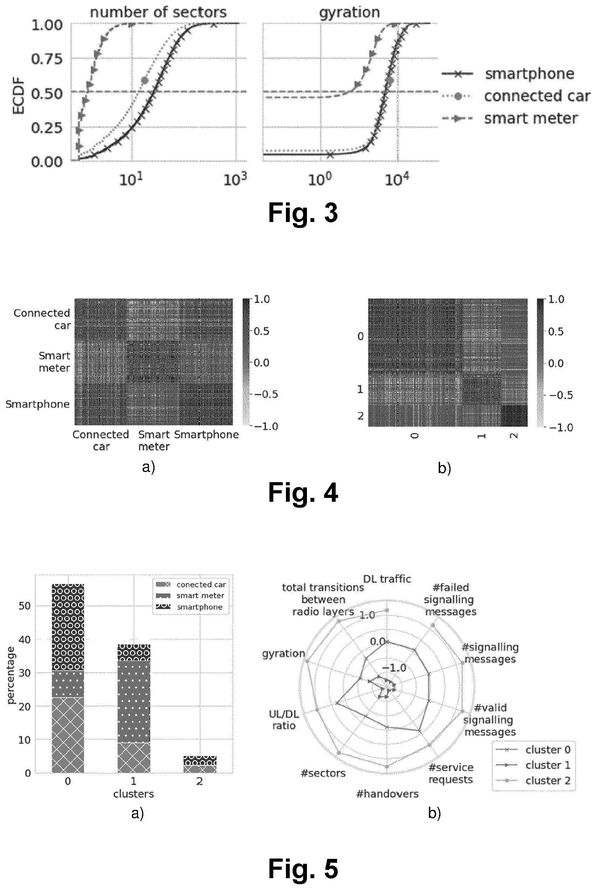

Use cases such as connected cars are especially challenging because of their high mobility, which might impact their experienced latency or throughput. In this section, the invention reports on the ECDF of per device mobility metrics (gyration and number of sectors) in Fig. 3. Although connected cars follow the same mobility pattern as smartphones in terms of gyration, they connect to a lower number of sectors, which is in line with being less active on the network. Connected cars have gyration 13% higher than smartphones in non-outlier ranges (i.e., comparing their 75th percentile). Plus, connected cars travel more in 2022, with a median of gyration 1.59x higher than in 2020. Smart meters are, on the contrary, stationary devices with the low number of sectors and gyration. In fact, 75% of these devices present a gyration lower than 441m and connect to at most 2 unique sectors.

### Device Clustering:

- Inter-category similarities: A random sample of 1 million devices (about 330 thousand per device category) was selected during a typical working week and an explanatory clustering method was applied to study the similarities between device categories. For this, the method dissects the behavior of devices, ignoring their device category (i.e., smartphone, connected car, smart meter). To do so, it relied on 456 average weekly metrics to capture traffic, mobility, signaling, handovers, and time spent on the network as input features. RAT-based metrics (e.g., the number of Attach events in 3G) are disregarded since if all the devices are 5G-capable 0 in the future, these sliced metrics will be worthless. Then, the method leverages a simple feed-forward neural network autoencoder to reduce the dimensions of the feature set to a given number (in particular to 8). In a particular embodiment, a three-layer Encoder-Decoder architecture with 128, 64, 32 hidden units is used, where the mean-squared-error (MSE) is considered as the loss function. Experiments were run for 50 epochs, where the batch size and learning rate were set to 128 and 0.001, respectively.

**Table 1. Clustering results on a sub-sample of devices.**

| Clustering approach | Silhouette | Davies-Bouldin | Sample Size [%] |
|---|---|---|---|
| K-means | 0.54 | 0.6 | 38, 33, 29 |
| Gaussian Mixture | 0.53 | 0.59 | 36, 32, 30 |
| Birch | 0.57 | 0.45 | 62, 34, 2 |
| Spectral | 0.28 | 0.85 | 42, 36, 22 |
| Agglomerative Clustering | 0.53 | 0.58 | 45, 40, 15 |

Then, the autoencoder output are used as features for clustering algorithms. To test the optimal number of clusters and the clustering approach, first, a smaller random sample of 60,000 users is considered. Choosing the number of clusters to 3 according to the elbow-method on the within-cluster sum of squared distances to the center. The result of different algorithms is compared using the Python Scikit-learn library in Table 1 considering two scores. The model with the highest Silhouette score or the lowest Davies-Bouldin score represents the best approach. Although the clustering algorithms result in a different group of users, as shown in the last column of Table 1, they entirely fail to separate the three groups of devices; this confirms the similarity among device categories that gathers them into the same cluster. Notice the results of the share of device categories in clusters are excluded due to insufficient space. Hereafter, Birch clustering is used, which yields the best score.

To justify the clustering approach, the proposed method further uses Representational Similarity Matrices (RSMs) and examines the cosine similarity between the representations of each pair of users in the same category (Fig.4.a)) and in the same cluster (Fig. 4.b)) for a random sample of 1,000 users. Square sections in Fig. 4 indicate the similarity between connected cars and smartphones. The square sections of the RSM lying along the darker diagonal in Fig. 4. b) correspond to the similarities between users in the same cluster, implying that the clustering approach can capture the similarities among users with the same behavior.

Ultimately, the proposed method applies clustering overall the 1 million users, and show the results in Fig. 5. As it appears in Fig. 5 a), clusters contain 57%, 38%, and 5% of users. Then, the invention focuses on finding the essential features that enable to differentiate clusters. Fig. 5. b) shows the relative difference between the median of clusters and the overall median for the top ten features. The clusters and their relative deviations from the median value are depicted as lines in this radar plot. Overall, three kinds of behavior are taken: most users are in cluster 0 in the middle with a median of 0.5MB DL traffic, connecting to 14 sectors per day. Whereas a limited number of users in cluster 2 are highly mobile and generate 1.8x higher DL traffic and transmit 2.2x more between radio layers on the network than cluster 0 comparing their medians. The last group of users in cluster 1 is stationary devices, mainly smart meters, that do not generate much DL traffic and remain in the same place. Overall, the results not only confirm the similarity between device categories (Fig. 4..a)) but also represent the results of the smart user classification approach.

**Table 2. Cars clusters withing the same group using a top APN, showing the percentage of the cluster in the sample (in column '%') and the deviation of the main features per cluster from the median values for smartphones.**

| Cluster # | % | DL | UL/DL ratio | Gyration | Characteristics |
|---|---|---|---|---|---|
| 0 | 75.2 | -99.48 | 91.98 | -22.98 | Low mobility |
| | | | | | Low traffic volume |
| 1 | 5.1 | -92.7 | 56,2 | 1,703.14 | High mobility |
| | | | | | Significant traffic volume |
| 2 | 1.2 | 853.4 | -93.2 | 1.47 | Low mobility |
| | | | | | High traffic volume |
| 3 | 18.4 | -96.5 | 55.02 | 235,6 | High mobility |
| | | | | | High traffic volume |

Intra-use-case category variation: The method separates connected cars sending the top-ranked APN (i.e., covering the most significant share of 44% among cars) on atypical working day. Then, inputs them into the k-means clustering by considering only traffic behaviour (i.e., DL/UL traffic and signalling messages) and mobility behaviour (i.e., number of radio sectors used, gyration) as input features. 4 clusters are chosen based on the elbow method evaluating the within-cluster sum of squares. Table 2 shows the characteristic of each cluster based on the delta variation percentage of each metric from the corresponding median of smartphones. 75% of these cars are in cluster 0 with limited mobility and low traffic, whereas traffic of 1.2% in cluster 2 is higher than the median of smartphones. (i.e., 1st vs. 3rd row in Table 2). The median gyration of cars in cluster 1 is 18 times higher than that of the smartphone, while it is only 3.3 times higher for cluster 3. This confirms the hypothesis that neither the device category nor the APN is a reliable approach to group devices with consistent behaviour and similar traffic patterns. Currently, transparency into device requirements is provided by the APN, IMSI ranges (full or partial), and, in some cases, the specific RAT. While it is critical to identify different services/devices for efficient 5G network slicing, it can be concluded that the APN approach is sub-optimal, as devices using the same APN behaved in different ways and generated divergent traffic patterns. This highlights the importance of smart user classification in the context of loT market growth to be able to benefit from and exploit better 5G innovations.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A computer implemented method for identifying device patterns and requirements for network orchestration, comprising:
accessing, by a processor, captured network activity data regarding at least three different categories of devices including a first type of device, a second type of device and a second type of device, each of the first, second and third type of devices operating according to a different radio access technology specification;
analyzing, by a processor, spatial and temporal behaviors of the first, second and third type of devices by computing metrics thereof using the captured network activity data, the metrics including service connectivity, user data traffic, control traffic, inbound roamers, user activity and/or mobility patterns; and
computing, by a processor, one or more similarity measures between the first, second and third type of devices by means of implementing an unsupervised clustering approach that identifies the emerging traffic patterns and network requirements within the three different categories of devices.

2. The method of claim 1, wherein the unsupervised clustering approach comprises:
dissecting the spatial and temporal behaviors, ignoring their device category, providing a feature set as a result;
using a neural network autoencoder to reduce dimensions of the feature set to a given number;
using an output of the neural network autoencoder as features for clustering algorithms, generating a given number of clusters as a result; and
choosing a given number of clusters according to the elbow-method.

3. The method of claim 2, wherein the neural network autoencoder comprises a three-layer Encoder-Decoder with 128, 64, 32 hidden units.

4. The method of claim 3, wherein the mean-squared-error is considered as the loss function of the neural network autoencoder.

5. The method of any one of the previous claims, further comprising using Representational Similarity Matrices, RSMs, and examining a cosine similarity between the representations of each pair of users in the same device category and in the same cluster.

6. The method of any one of the previous claims, wherein the analyzing step further comprises computing an evolution between two different time intervals of each different type of device.

7. The method of any one of the previous claims, wherein the first type of devices operate according to a massive Machine Type Communication, mMTC, specification; the second type of devices operate according to an ultra-reliable low-latency communication, URLLC, specification; and the third type of devices operate according to an enhanced Mobile Broadband, eMBB, specification.

8. The method of claim 7, wherein the first type of devices comprises smart meters, the second type of devices comprises connected cars and the third type of devices comprises smartphones.

9. A non-transitory computer readable medium comprising code instructions that when executed by a computing device implement the method of any of claims 1 to 8.
